Europäisches Patentamt

European Patent Office

Office européen des brevets

(19)

(11) Publication number: **0 039 201**
**B1**

(12) **EUROPEAN PATENT SPECIFICATION**

(45) Date of publication of patent specification: **14.12.83**

(51) Int. Cl.³: **B 29 D 27/02**

(21) Application number: **81301783.7**

(22) Date of filing: **22.04.81**

(54) Temperature controlling apparatus for use in preparing resin foams.

(30) Priority: **24.04.80 JP 55125/80**

(43) Date of publication of application:
**04.11.81 Bulletin 81/44**

(45) Publication of the grant of the patent:
**14.12.83 Bulletin 83/50**

(84) Designated Contracting States:
**BE DE FR GB LU NL**

(56) References cited:
**GB - A - 1 034 595**
**US - A - 3 181 840**
**US - A - 3 521 863**

(73) Proprietor: **SEKISUI KASEIHIN KOGYO KABUSHIKI KAISHA**
**25, 1-chome**
**Minami Kyobate-cho Nara-shi (JP)**

(72) Inventor: **Kayashi, Motoshige**
**18-7, Gakuen Asahi-cho**
**Nara-shi (JP)**
Inventor: **Tanaka, Shigetoshi**
**8-208, Hokuwa Danchi**
**1424, Tohkujo-cho Nara-shi (JP)**
Inventor: **Koi, Tsuneo**
**2-35, 3-chome Hatakeda Ohji-cho**
**Kita Katsuragi-gun Nara-ken (JP)**
Inventor: **Yoshii, Motokazu**
**360, Ohaza Daianji**
**Tawaramoto-cho Shiki-gun Nara-ken (JP)**

(74) Representative: **Ayers, Martyn Lewis Stanley**
**J.A. KEMP & CO. 14 South Square Gray's Inn**
**London, WC1R 5EU (GB)**

Courier Press, Leamington Spa, England.

# Temperature controlling apparatus for use in preparing resin foams

This invention relates to a temperature controlling apparatus for use in preparing resin foams.

Various methods have hitherto been used for preparing resin foams, methods using an extruder have been widely practised, because they can be carried out continuously and hence advantageously. Using an extruder, a thermoplastic resin is heated and melted in the extruder, a foaming agent is injected into the molten resin to produce a mixture of the resin and the foaming agent, which is then mixed homogeneously under pressure and advanced to a die, from which the mixture is extruded to form a shaped article of a desired cross-section. The shaped article is then foamed in the air to give the resin foam.

In the method described above, to produce a composition having the foaming agent distributed homogeneously therein, the resin has first to be heated to have a sufficiently high temperature that the resin is completely molten, and the foaming agent is then injected into the heated resin. By the time the resin containing the foaming agent is extruded from the die, the resin should not have such a high temperature, but should be cooled down to a temperature at which the resin can maintain its own shape. Hence, the resin composition containing the foaming agent must be cooled on the way to the die.

The cooling must take place equally and uniformly throughout the whole of the resin so that it all has the same temperature because otherwise the resin cannot be foamed equally and uniformly. For this reason, various apparatuses have been proposed which intend to cool uniformly the resin composition. Most such apparatuses are constructed so that a rotating means which can be heated and cooled is provided in a barrel means which can be also heated and cooled, the rotating means being provided on the outer surface thereof with a number of blades, each of which projects towards the inner surface of the barrel and extends substantially in the axial direction of the rotating means, the blades being arranged in zig-zag form in the axial direction.

The Japanese Patent Publication No. 48—544 teaches the use of a flat plate for the blades and that the blades should be secured to the outer surface of the rotating means so that the surface of each of the blades may lie in a tangential plane of the outer surface and so that the blades extend in the axial direction of the rotating means. The publication describes the tangential blades as "rotating wings", and disclosed that perforations may be provided in them. Japanese Patent Publication No. 54—42026 which shows the features of the first part of claim 1 discloses that the blades should be made of flat plates which project perpendicularly on the outer surface of the rotating means and further suggests that the blades should be provided with perforations inclined towards either outwardly or inwardly by turns in each of the blades.

Since the cooling apparatuses disclosed in these publications employ blades originally in the form of flat plates, the blades give rise to a great resistance to rotation of the rotating means, and accordingly the apparatuses have the disadvantages that they do not give good agitation considering the large amount of power required for their rotation. Furthermore, although the apparatus cools the resin from the surface of the rotating means, the apparatus gives rise to dead spaces, wherein the resin is stagnant, behind the blades in the vicinity of the rotating means, and accordingly the apparatus cannot cool the resin equally and uniformly. This invention seeks to reduce or eliminate these disadvantages.

This invention is in essence characterized by that each of the blades is formed by a ⊓-shaped frame instead of the flat plate used previously. Thus the present invention has the advantages that the blades do not produce such a great resistance to rotation of the rotating means. The invention further makes it a characteristic that each frame has a top bar fixed to the rotating means in close proximity to the inside surface of the barrel, so that the top bar scrapes away the resin adhered to the inside surface of the barrel, and passes the scraped resin into perforations in the blades and causes the resin to flow from the barrel towards the outer surface of the rotating means. The resin thus flows inwardly in an oblique direction so that the resin is passed over the outer surface of the rotating means without producing any stagnant portion, and this flow stirs the resin uniformly throughout the whole thereof. Thus according to the present invention, there is provided a temperature controlling apparatus for use in preparing resin foams, comprising a barrel means and a rotating means, both of which can be heated or cooled, the rotating means being rotatably provided in the barrel and having a number of blades secured to the outer surface thereof, each of the blades projecting towards the inner surface of the barrel means and extending substantially in the axial direction of the rotating means, characterized in that each of the blades is formed by a ⊓-shaped frame comprising a top bar situated in the middle portion of the ⊓-shaped frame and located in close proximity to the inner surface of the barrel means, there being a gap between the top bar and the outer surface of the rotating means, the top bar being formed in such a shape that a first end face thereof, facing the inner surface of the barrel, slopes progressively inwardly from its leading edge, in the direction of normal rotation of the rotating means, in that inwardly of said first face, the top bar has a second face facing forwardly in the direction of normal rotation of the rotating means and sloping inwardly from its leading edge and in that the forward end of the top bar is sharp.

The invention will be further described by way of non-limiting example with reference to the accompanying drawings, in which:—

Fig. 1 is a cross-sectional view partly cut away of one embodiment of apparatus according to the present invention.

Fig. 2 is an enlarged perspective view of one of the blades in the apparatus shown in Fig. 1.

Fig. 3 is an enlarged cross-sectional view of the blade shown in Fig. 2 in situ.

Fig. 4 is an enlarged cross-sectional view of another blade which may be used in embodiments of apparatus according to the present invention.

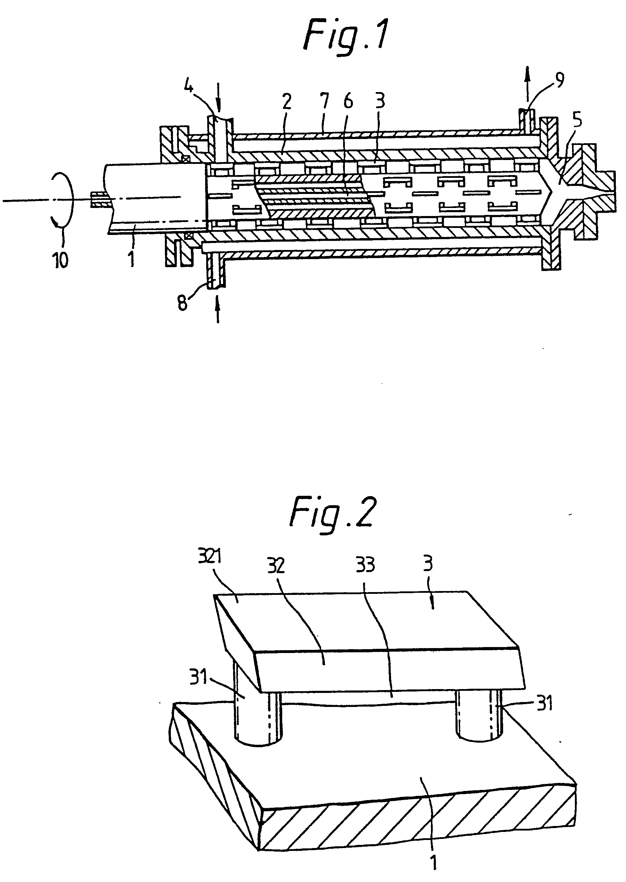

In Fig. 1, reference numeral 1 denotes a rotating means, 2 a barrel means, 3 blade, 4 a resin inlet, 5 a resin outlet, 6 a pipe for circulating medium in rotating means 1, and 7 a cover for barrel means 2. The rotating means 1 can be heated or cooled by means of the medium, which is introduced into rotating means 1 around the outside of pipe 6, and discharged through the inside of pipe 6 to outside the rotating means 1. Barrel means 2 can be also heated or cooled by a medium, which is introduced through inlet 8 and discharged from outlet 9. Rotating means 1 is rotated in the direction shown by the arrow 10. While the rotating means is being rotated, a resin is introduced into barrel means 2 through inlet 4, and in the course of advancing along the inside of barrel means 2, the resin is well stirred by rotation of rotating means 1. Simultaneously the resin is heated or cooled to a desired temperature by means of rotating means 1 and barrel means 2. The resin is especially well stirred by blades 3 provided on rotating means 1, and comes to have a uniform temperature throughout the whole thereof.

As shown in Fig. 1, blades 3 are provided so as to be distributed over all the outer surface of rotating means 1 extending from resin inlet 4 to resin outlet 5. Blades 3 are located at appropriate places chosen from the point of view that blades 3 can scrape away all the resin in contact with inside surface of barrel means 2 while the rotating means is being rotated, without leaving the resin in contact with the inside surface. The blades 3 are evenly distributed in the axial direction of rotating means 1. In the example shown in Fig. 1, blades 3 are located so as to be distributed evenly or uniformly circumferentially of rotating means 1, and so that axially adjacent blades just reach one another or partially overlap in the axial direction of rotating means 1. The blades 3 are arranged so that when viewed from the side, they are arranged in axially spaced circumferential lines, with blades of adjacent lines just reaching one another and so that when viewed end on, the blades of one line are aligned mid-way between blades of the adjacent line, and so on.

As shown in Fig. 2, blade 3 is in the form of the ⌐-shaped frame. Particularly, blade 3 comprises a top bar 32 supported in spaced relation to the rotating means by two supports 31, located at each end of top bar 32 in the longitudinal direction thereof. Each of supports 31 is of a pillar shape having an annular cross-section and both supports 31 are equal in height and cross section thereof. The lower end of each support 31 is secured to the outer surface of rotating means 1. A gap or perforation 33 is formed by enclosure of top bar 32, supports 31 and the surface of rotating means 1. As to the relation between the lengths of supports 31 and top bar 32, top bar 32 desirably has a length of between twice and five times the length of the supports 31.

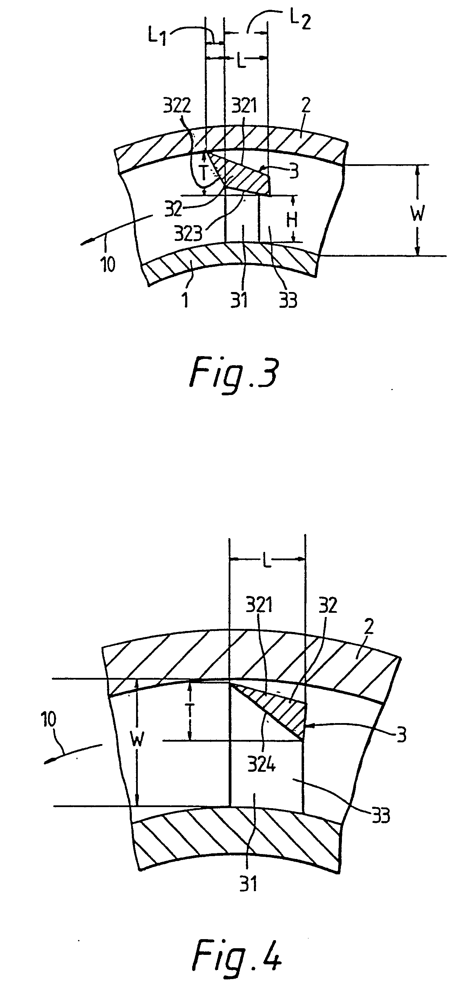

As shown in Fig. 3, rotating means 1 is, in use, rotated in the direction of arrow 10. A first, upper face 321 of top bar 32 is positioned in close proximity to inside surface of barrel means 2, being in the closest proximity at the forward end thereof, and the upper face forms an inclined face sloping progressively downwards, i.e. radially inwardly, rearwardly. A second, front face 322 is directed forwardly in the rotating direction and intersects the upper face 321 making an acute angle and forms also an inclined face sloping progressively radially inwardly rearwardly. Furthermore, lower face 323 of top bar 32 also forms an inclined face sloping progressively radially inwardly rearwardly with respect to the direction of rotation. Lower face 323 of top bar 32 forms a face towards the outer surface of rotating means 1, and should be distinguished from front face 322, but may be merged into the front face 322.

Upper face 321 is preferably sloped inwardly rearwardly in a rate of 0.1 to 0.8, that is, the face is lowered by a height between 0.1 to 0.8 at the rearward position by the distance of 1, and front face 322 is also preferably sloped inwardly rearwardly in a rate of 0.5 to 3.0.

Gap 33 has height H, which is more than a half of width W, which is the width of the resin passage formed between rotating means 1 and barrel means 2, when measured in the radial direction of the barrel means. In Fig. 3, since lower face 323 of the top bar forms the inclined face sloping progressively lower rearwardly, height H is smallest at the rear edge of lower face 323, however, the height H is there still more than a half of passage width W. When this relation is stated on the basis of top bar 32, since top bar 32 is positioned in close proximity to the inner surface of barrel means 2, the difference between passage width W and height H is nearly equal to thickness T of top bar 32, and accordingly thickness T of top bar 32 is less than a half of passage width W. As to passage width W, it may range from 20 to 100 mm, desirably from 30 to 50 mm.

Top bar 32 has a length L, which is measured in the rotational direction, and which should be more than one-third and less than twice the passage width W. As shown in Fig. 3, when the downward face of top bar 32 is divided into front face 322 and lower face 323, length $L_2$ of lower face 323 in the rotating direction should have desirably a ratio between 1 to 2 and 2 to 1 against length $L_1$ of front face 322 in the rotating direction.

Fig. 3 shows top bar 32 having a quadrilateral shape in cross-section; however, the cross-section is not limited to quadrilateral shapes. For example, top bar 32 may have a polygonal shape, such as a pentagonal shape, in cross-section, and moreover may have a triangular shape in cross-section as shown in Fig. 4. In blade 3 shown in Fig. 4, it may be considered that front face 322 and lower face 323 shown in Fig. 3 are merged to form lower face 324 in Fig. 4. Length L of blades 3 has the same relations to height T and passage width W as in Fig. 3.

Fig. 1 shows a rotating means of one side supporting type, i.e. supported at one end; however, the rotating means may be of both side supporting type such as of roll-type. When the rotating means is of a roll-type, the resin outlet needs to be provided on the lateral side of barrel means 2. The apparatus according to the present invention may be of this type.

When the illustrated apparatus according to the present invention is to be operated, rotating means 1 is rotated in the direction of arrow 10 at a rate between 1 and 10 r.p.m., a heating or cooling medium is introduced into both rotating means 1 and barrel means 2, and a thermoplastic resin which as been heated and impregnated with a foaming agent is introduced through resin inlet 4 into the apparatus. The resin is then advanced through passage between the rotating means 1 and barrel means 2 to resin outlet 5, from which the resin is extruded. While advancing along the passage, the resin is heated or cooled by rotating means 1 and barrel means 2, simultaneously stirred and kneaded well by rotating means 1, and is extruded from resin outlet 5 so that the resin is uniformly heated or cooled so as to have the same temperature throughout the whole thereof.

The apparatus according to the present invention is provided with blades 3 standing upright on rotating means 1. Each of blades 3 is formed by a ⊓-shaped frame, in which upper face 321 of the top bar is positioned in close proximity to the inner surface of barrel 2, and in which upper face 321 is sloped progressively downwardly rearwardly, hence blades 3 can scrape away the resin which is adhered to and heated or cooled by the inner surface of barrel 2. Moreover, since top bar 32 has front face 322 and lower face 323 sloping downwardly rearwardly, the scraped resin is pushed radially inwardly along front face 322 and lower face 323. Since gap 33 is formed underneath front face 322 and lower face 323, the resin is advanced along front face 322 and lower face 323 towards the outer surface of rotating means 1. Thus advanced resin is intimately mixed with the resin which has been heated or cooled by the outer surface of rotating means 1 to give the resin having a uniform lower temperature throughout the whole thereof. Furthermore, since each of blades 3 is formed by a ⊓-shaped frame in which each of supports 31 is formed by a cylinder, blades 3 by themselves do not give excessive resistance to rotation of rotating means 1. Still further, since there is no dead space behind blades 3, in which the resin is left stagnant, while rotating means 1 is being rotated, the resin is prevented from being decomposed. Accordingly, the apparatus without difficulty gives resin having a uniform temperature and composition throughout the whole thereof. In this regard, the apparatus brings about remarkable advantages.

## Claims

1. A temperature controlling apparatus for use in preparing resin forms, comprising a barrel means (2) and a rotating means, (1) both of which can be heated or cooled, the rotating means being rotatably provided in the barrel and having a number of blades (3) secured to the outer surface thereof, each of the blades projecting towards the inner surface of the barrel means and extending substantially in the axial direction of the rotating means, characterized in that each of the blades (3) is formed by a ⊓-shaped frame comprising a top bar (32) situated in the middle portion of the ⊓-shaped frame and located in close proximity to the inner surface of the barrel means, there being a gap (33) between the top bar and the outer surface of the rotating means (1), the top bar being formed in such a shape that a first upper face (321) thereof, facing the inner surface of the barrel slopes progressively inwardly from its leading edge, in the direction of normal rotation of the rotating means, in that inwardly of said first face, the top bar has a second face (322, 323, 324) facing forwardly in the direction of normal rotation of the rotating means and sloping inwardly from its leading edge and in that the forward end of the top bar is sharp.

2. The temperature controlling apparatus as defined in Claim 1, wherein the said rotating means (1) is rotatably provided in the barrel (2) to form between them a resin passage having in the radial direction a width between 20 mm and 100 mm.

3. The temperature controlling apparatus as defined in Claim 1 or 2, wherein each said gap has a height (H) in the radial direction more than a half of the width of the resin passage (W)

**7** · **0 039 201** · **8**

formed between the rotating means (1) and the barrel means (2).

4. The temperature controlling apparatus as defined in any one of Claims 1 to 3, wherein each top bar (32) has a length in the rotating direction more than one-third and less than twice the width (W) of the resin passage.

## Revendications

1. Dispositif de régulation de température utilisable pour la préparation de mousses synthétiques, comprenant un corps (2) et un dispositif tournant (1), qui peuvent tous deux être chauffés ou refroidis, le dispositif tournant étant monté à rotation dans le corps et comportant un certain nombre de pales (3) qui sont fixées sur sa surface extérieure, chacune des pales faisant saillie en direction de la surface intérieure du corps et s'étendant essentiellement dans la direction axiale du dispositif tournant, caractérisé en ce que chacune des pales (3) est constituée par un châssis en forme de ∏ comprenant une barre supérieure (32) située dans la partie médiane du châssis en forme de ∏ et placée à proximité étroite de la surface intérieure du corps, un intervalle (33) étant ménagé entre la barre supérieure et la surface extérieure du dispositif tournant, la barre supérieure étant profilée à une forme telle qu'une première face extrême (321) de celle-ci, dirigée vers la surface intérieure du corps, soit inclinée progressivement vers l'intérieur à partir de son bord avant, dans la direction de rotation normale du dispositif tournant, en ce que, vers l'intérieur de ladite première face, la barre supérieure comporte une seconde face (322, 323) dirigée vers l'avent dans la direction de rotation normale du dispositif tournant et inclinée vers l'intérieur à partir de son bord avant et en ce que l'extrémité avant de la barre supérieure est à bord vif.

2. Dispositif de régulation de température selon la revendication 1, caractérisé en ce que ledit dispositif tournant (1) est monté à rotation dans le corps (2) pour former entre eux un passage de résine ayant dans la direction radiale une largeur comprise entre 20 et 100 mm.

3. Dispositif de régulation de température selon l'une des revendications 1 ou 2, caractérisé en ce que chaque intervalle a une hauteur H, mesurée dans la direction radiale, qui est supérieure à la moitié de la largeur du passage de résine W formé entre le dispositif tournant (1) et le corps (2).

4. Dispositif de régulation de température selon l'une quelconque des revendications 1 à 3, caractérisé en ce que chaque barre supérieure (32) a, dans la direction de rotation, une longueur supérieure à un tiers et inférieure au double de la largeur W du passage de résine.

## Patentansprüche

1. Temperaturregelvorrichtung zur Verwendung bei der Herstellung von Kunststoffschaum, mit einem Zylinder (2) und einer Drehvorrichtung (1), die beide heizoder kühlbar sind, wobei die Drehvorrichtung in dem Zylinder drehbar angeordnet ist und eine Anzahl von auf ihrer Außenfläche befestigten Schaufeln (3) aufweist, von denen jede in Richtung auf die Innenfläche des Zylinders vorsteht und sich weitgehend in Axialrichtung der Drehvorrichtung erstreckt, dadurch gekennzeichnet, daß jede der Schaufeln (3) durch einen ∏-förmigen Rahmen gebildet ist, der einen im Mittelteil des ∏-förmigen Rahmens vorgesehenen und in nächster Nähe zur Innenfläche des Zylinders angeordneten oberen Querbalken (32) aufweist, wobei ein Zwischenraum (33) zwischen dem Querbalken und der Außenfläche der Drehvorrichtung (1) besteht, daß der Querbalken so geformt ist, daß eine erste obere, zur Innenfläche des Zylinders weisende Fläche (321) davon, ausgehend von ihrer in normaler Drehrichtung der Drehvorrichtung vorderen Kante, zunehmend nach innen geneigt ist, daß der Querbalken nach innen zu von der genannten ersten Fläche eine zweite in normaler Drehrichtung der Drehvorrichtung nach vorne weisende Fläche (322, 323, 324) aufweist, die von ihrer vorderen Kante aus nach innen geneigt ist, und daß das vordere Ende des Querbalkens scharf ist.

2. Temperaturregelvorrichtung nach Anspruch 1, in der die Drehvorrichtung (1) so in dem Zylinder (2) drehbar angeordnet ist, daß zwischen ihnen ein Durchlaß für Kunststoffmaterial gebildet ist, der in radialer Richtung eine Weite zwischen 20 und 100 mm aufweist.

3. Temperaturregelvorrichtung nach Anspruch 1 oder 2, in der jeder genannte Zwischenraum in radialer Richtung eine Höhe (H) von mehr als der Hälfte der Weite (W) des zwischen der Drehvorrichtung und dem Zylinder (2) gebildeten Durchlasses für das Kunststoffmaterial hat.

4. Temperaturregelvorrichtung nach einem der Ansprüche 1 bis 3, in der jeder Querbalken (32) in Drehrichtung eine Länge von mehr als einem Drittel und weniger als dem Zweifachen der Weite (W) des Durchlasses für das Kunststoffmaterial hat.

5

# Fig.1

# Fig.2

Fig.3

Fig.4